Europäisches Patentamt

European Patent Office

Office européen des brevets

(19)

(11) Numéro de publication : **0 501 886 A1**

## (12) DEMANDE DE BREVET EUROPEEN

(21) Numéro de dépôt : **92400506.9**

(22) Date de dépôt : **27.02.92**

(51) Int. Cl.⁵ : **G11B 23/087,** G11B 23/04

(30) Priorité : **27.02.91 FR 9102326**

(43) Date de publication de la demande :
**02.09.92 Bulletin 92/36**

(84) Etats contractants désignés :
**BE DE ES FR GB IT**

(71) Demandeur : **Société Anonyme DYPY
20 rue du Général Delestraint, Z.I.
Vaux-le-Pénil
F-77000 Melun (FR)**

(71) Demandeur : **RPS MAGNETICS
Rue Ambroise Croizat
F-77370 Nangis (FR)**

(72) Inventeur : **Jobart, Jean-Louis
5 rue du Bas Samoreau, Samoreau
F-77210 Avon (FR)**

(74) Mandataire : **Colas, Jean-Pierre
Cabinet de Boisse 37, avenue Franklin D.
Roosevelt
F-75008 Paris (FR)**

(54) **Cassette de produit en bande.**

(57) La cassette comprend une bande circulant entre une bobine débitrice et une bobine réceptrice enfermées dans un boîtier en deux parties réalisées dans des matériaux présentant des coefficients de dilatation thermique différents. Pour éviter un cintrage de la cassette due à une dilatation thermique différentielle, les deux parties sont assemblées par au moins un moyen de liaison (16', 20') à jeu qui autorise un libre glissement d'une partie du boîtier sur l'autre, sans transmission de contraintes, entre les deux parties.

Application à une cassette de bande magnétique.

FIG.:5

EP 0 501 886 A1

La présente invention est relative à une cassette de produit en bande, notamment de support de magnétogramme en bande et, plus particulièrement encore, à une telle cassette comportant des moyens prévenant une déformation de la cassette sous l'effet de la chaleur.

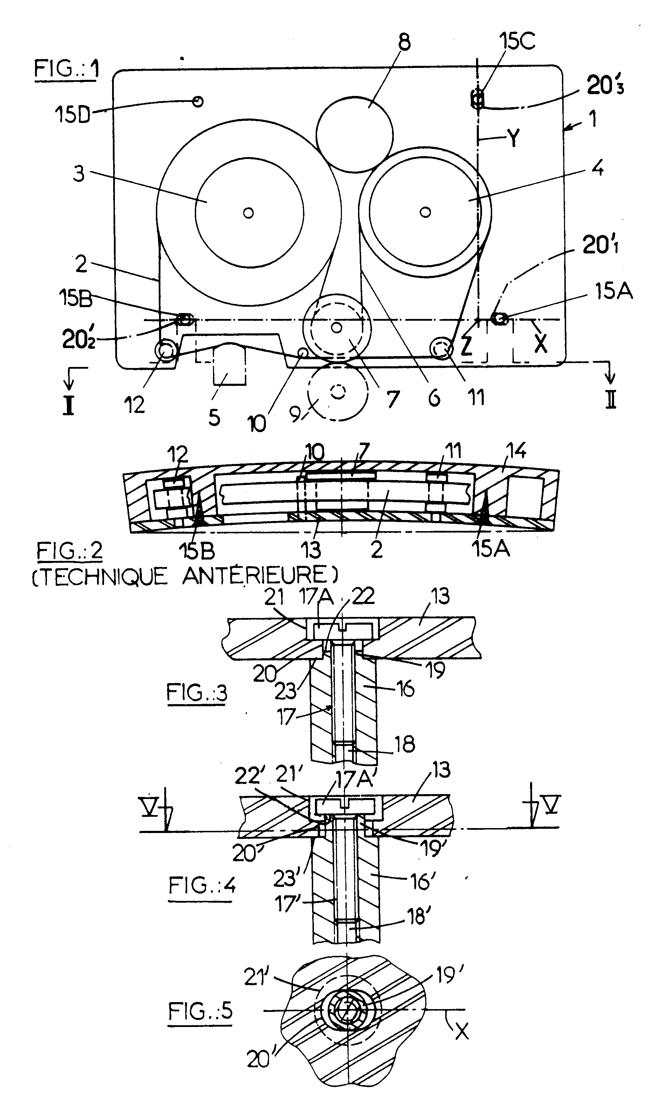

On a représenté aux figures 1 et 2 du dessin annexé une telle cassette, connue du brevet français 2 212981 et conçue pour fonctionner au sein d'un système d'enregistrement/lecture de données numériques. Sur la vue en plan et en coupe de la figure 1, il apparaît que cette cassette comprend un boîtier 1 conçu pour protéger une bande magnétique 2 qui circule entre des noyaux de bobine 3 et 4 pour passer devant une tête magnétique 5 formant partie d'un appareil d'enregistrement/lecture d'informations sur la bande magnétique, non représenté. Les deux bobines sont entraînées en synchronisme par une courroie 6 tendue entre un cabestan 7 et un galet de renvoi 8, le cabestan 7 étant entraîné en rotation par un galet d'entraînement 9 formant partie de l'appareil d'enregistrement/lecture précité. Un axe 10 et des guides fixes 11,12 définissent la trajectoire suivie par la bande 2, au niveau de la tête magnétique 5.

Sur la vue en coupe de la figure 2, prise suivant le trait de coupe II-II de la figure 1, il apparaît que le boîtier 1 est constitué de deux parties 13,14, constituant respectivement un fond plan et un couvercle fixé sur ce fond plan par des vis 15A à 15D. Le fond 13 est couramment réalisé en un matériau métallique alors que le couvercle 14 est moulé dans une matière plastique, éventuellement transparente.

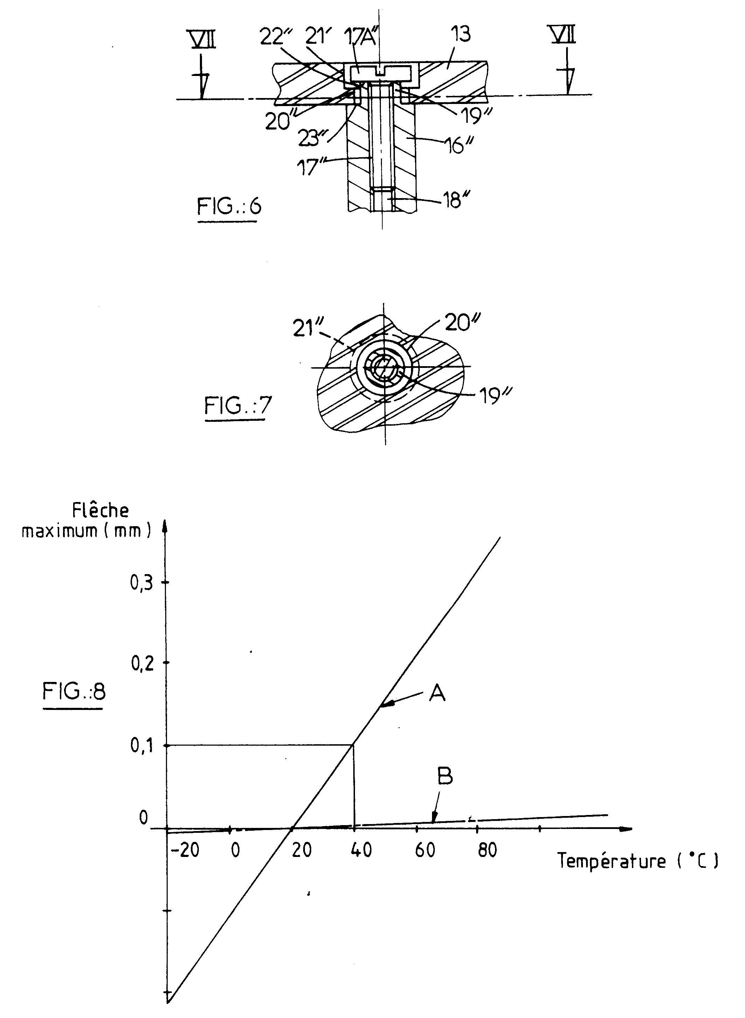

De telles cassettes sont conçues pour travailler dans l'environnement d'un microordinateur ou d'un mini-ordinateur de bureau et doivent donc fonctionner dans une gamme de températures assez large. Or, on a constaté que, du fait d'une dilatation différentielle des deux parties du boîtier due à la nature différente des matériaux les constituant, on peut observer à certaines températures un cintrage du boîtier perpendiculairement à son épaisseur. La figure 2 illustre un tel cintrage de la cassette, en l'exagérant pour la clarté de l'exposé. Le graphe A de la figure 8 du dessin annexé illustre la variation de la flèche maximum du boîtier cintré, en fonction de la température, pour un couple de matériaux des types définis ci-dessus et utilisés pour constituer respectivement le fond et le couvercle de la cassette des figures 1 et 2. Il apparaît sur ce graphe que cette flèche peut atteindre une valeur de 0,1 mm pour un boîtier d'une longueur de 150 mm environ, lorsque ce boîtier est porté à 40°C. Cette flèche provoque alors un décalage transversal de la bande par rapport à la tête magnétique 5 de l'appareil d'enregistrement/lecture. Si l'on considère que la bande magnétique 2 peut couramment porter de 10 à 24 pistes d'enregistrement parallèles sur une largeur de 6 mm environ, on conçoit qu'un tel décalage transversal de 0,1 mm n'est pas sans effet néfaste sur la qualité de l'enregistrement lecture d'informations réalisé par la tête magnétique 5 sur des pistes dont la largeur est alors de l'ordre de grandeur de ce décalage. Il convient donc d'empêcher autant que possible un tel cintrage de la cassette.

Pour ce faire on a proposé (voir le brevet US-A-4.571.789) de remplacer l'assemblage par vis des deux parties du boîtier par un assemblage par chevilles fendues fixées, à une extrémité, dans le couvercle et forcées à l'autre extrémité dans un trou conique autobloquant du fond du boîtier. La fente prévue dans ces chevilles donne à celles-ci une souplesse leur permettant d'absorber des dilatations différentielles pour éviter que de telles dilatations ne fassent naître des contraintes entre les deux parties du boîtier, contraintes génératrices d'un cintrage de la cassette.

Cette solution présente néanmoins plusieurs inconvénients. D'une part les chevilles fendues, étant simplement pincées dans le fond du boîtier, peuvent être sujettes à des démontages sous l'effet de chocs éventuels avec pour résultat un desserrage partiel ou total des deux parties du boîtier de la cassette. D'autre part, l'absorption par les chevilles des dilatations ne permet pas de supprimer toute application de contraintes entre les deux parties du boîtier, ce qui serait pourtant souhaitable pour éviter tout problème de cintrage.

On connaît aussi du brevet US-A-4.989.806 un boîtier de cassette en deux parties assemblées d'une part par un organe de liaison fixe et, d'autre part, par au moins un organe de liaison "à expansion". Ce dernier prend la forme d'un ergot et d'un organe tel qu'une vis fixée dans cet ergot et passant dans un trou élargi percé dans une partie du boîtier pour retenir celle-ci, par sa tête, contre l'autre partie du boîtier qui porte l'ergot. Le jeu des deux parties du boîtier est permis par le trou élargi et par un autre jeu établi entre la tête de vis et l'extrémité de l'ergot. L'ajustement de ce dernier jeu est délicat. Un jeu insuffisant conduit à un blocage des deux parties du boîtier. Un jeu excessif réduit l'étanchéité du boîtier.

La présente invention a donc pour but de réaliser une cassette de produit en bande comprenant un boîtier constitué de deux parties assemblées l'une à l'autre, cette cassette étant munie de moyens d'assemblage de ces parties conçus pour empêcher tout cintrage de la cassette sous l'effet de dilatations thermiques différentielles tout en évitant les inconvénients mentionnés plus haut.

On atteint ces buts de l'invention, ainsi que d'autres qui apparaîtront à la lecture de la description qui va suivre, avec une cassette de produit en bande comprenant au moins une bobine du produit monté à rotation dans un boîtier protégeant cette bobine, ce boîtier comprenant au moins deux parties assemblées l'une à l'autre par au moins un moyen de liaison avec eu autorisant à son niveau un glissement d'une partie du boîtier sur l'autre en cas de dilatation différentielle de ces deux parties, ledit moyen de liaison étant constitué par un ergot formé dans une partie du boîtier et par une vis fixée dans cet ergot et traversant un trou percé dans l'autre partie du boîtier de manière que sa tête empêche les deux parties du boîtier de s'écarter l'une de l'autre suivant l'axe de la vis. Suivant l'invention, l'extrémité dudit ergot traverse le trou et est conformée pour définir une surface d'appui d'une paroi de la partie du boîtier dans laquelle est formée ledit trou et une surface de butée pour la tête de vis, la distance de ces surfaces étant telle qu'elle établit un léger jeu autorisant ledit glissement relatif des parties du boîtier situées entre ces surfaces.

Grâce à ce jeu, les deux parties peuvent se dilater librement l'une par rapport à l'autre, ce qui garantit l'absence de transmission des contraintes mécaniques entre ces parties et donc l'absence de cintrage de la cassette. Comme on le verra plus loin, la distance des surfaces de butée et d'appui peut être fixée avec précision dans le cours de la fabrication des deux parties du boîtier, ce qui garantit la présence d'un jeu optimal autorisant le glissement relatif de ces deux parties.

Suivant un mode de réalisation de la présente invention, le trou prend la forme d'une boutonnière percée dans l'autre partie du boîtier. Avantageusement, l'axe de la boutonnière peut passer par un moyen local d'assemblage fixe distant du moyen de liaison et assurant le maintien en regard de deux points homologues des deux parties de la cassette. Plus avantageusement encore, lorsque la cassette contient un support de magnétogramme en forme de bande agencé pour défiler suivant une direction prédéterminée contre une tête d'enregistrement/lecture, l'axe de la boutonnière est parallèle à cette direction. Ainsi une dilatation différentielle des parties du boîtier ne perturbe dans aucune direction transversale la position relative d'une tête d'enregistrement/lecture par rapport au support de magnétogramme en bande.

Suivant une autre disposition optionnelle de la cassette selon l'invention, qui se combine avantageusement avec la précédente, celle-ci comprend au moins un autre moyen de liaison constitué par un ergot solidaire d'une des parties du boîtier et passant dans un trou percé dans l'autre partie de ce boîtier, ce trou étant dimensionné de manière à autoriser à son niveau un déplacement relatif dans un plan des deux parties du boîtier suivant deux degrés de liberté, dans le domaine de température considéré. Ainsi chaque partie du boîtier est-elle totalement libre de glisser sur l'autre dans toutes les directions d'un plan, sans contrainte et donc sans production d'un cintrage de la cassette.

Suivant encore une autre disposition optionnelle de la cassette selon l'invention, les deux parties du boîtier sont assemblées par au moins deux moyens de liaison coopérant avec des boutonnières coaxiales, l'axe des boutonnières étant parallèle à la direction prédéterminée précitée de défilement de la bande pour en tirer le même avantage. Les deux parties du boîtier peuvent être assemblées en outre par au moins un troisième moyen de liaison coopérant avec une troisième boutonnière écartée des deux premières et d'axe sensiblement perpendiculaire à l'axe commun de celles-ci.

D'autres caractéristiques et avantages de la présente invention apparaîtront à la lecture de la description qui va suivre et à l'examen du dessin annexé dans lequel :

– les figures 1 et 2 représentent une cassette de la technique antérieure, discutée en préambule de la présente description,

– la figure 3 est une vue en coupe axiale d'un moyen local d'assemblage fixe incorporé à la cassette suivant l'invention,

– la figure 4 est une vue en coupe axiale d'un ergot formant partie d'un moyen de liaison avec jeu, à ergot et boutonnière utilisés dans la cassette selon l'invention,

– la figure 5 est une vue en coupe prise suivant le trait de coupe V-V, de la figure 4,

– la figure 6 est une vue en coupe axiale d'un moyen de liaison avec jeu à deux degrés de liberté utilisé dans la cassette suivant l'invention,

– la figure 7 est une vue en coupe prise suivant le trait de coupe VII-VII, de la figure 6, et

– la figure 8 représente les graphes de dilatation thermique d'une cassette de la technique antérieure et d'une cassette suivant l'invention.

On revient brièvement à la figure 1 pour remarquer les positions relative des quatre organes de fixation à vis 15A à 15D qui servent classiquement à assembler les deux parties du boîtier de la cassette. Les quatre vis sont voisine chacune d'un angle du boîtier, deux de ces vis 15A, 15B définissant un axe voisin et généralement parallèle à la trajectoire suivie par la bande magnétique 2 au niveau de la tête magnétique 1.

Suivant un mode de réalisation de la présente invention, on remplace ces vis en disposant en l'un des emplacements de vis 15A, 15B, un moyen d'assemblage fixe tel que celui représenté à la figure 3 et, à l'autre emplacement, un moyen de liaison avec jeu tel que celui représenté aux figures 4 et 5.

Le moyen d'assemblage fixe représenté à la figure 3 est constitué d'un ergot 16 et d'une vis 17 fixée axialement dans cet ergot de manière à serrer sur l'extrémité de celui-ci le fond 13 du boîtier percé d'un trou 20 traversé par la vis 17. Ainsi l'ergot 16 est-il formé d'une pièce avec le couvercle 14 en matière plastique, ou fixé dans ce couvercle de manière à déborder perpendiculairement du fond du couvercle. La vis 17 présente une tête large 17A et cette vis, éventuellement autotaraudeuse, se fixe dans un trou axial 18 ménagé dans l'ergot 16, de forme généralement cylindrique. Au débouché du trou 18, l'ergot 16 présente un épaulement circulaire 19 qui s'ajuste complémentairement dans le trou 20 percé dans le fond 13 du boîtier, ce trou 20 s'élargissant en 21 pour recevoir la tête 17A de la vis. Ainsi, dans la position d'assemblage représentée sur la figure 3, l'ergot 16 solidaire du couvercle du boîtier est-il fixé axialement en position dans le trou étagé 20, 21 percé dans le fond 13, grâce à l'épaulement circulaire 19. Les trous 18, 20 et 21 sont ainsi maintenus rigoureusement coaxiaux et immobiles sur leur axe commun, ce qui assure la mise en repérage des points homologues associés des deux parties du boîtier. Il s'ensuit qu'au niveau de l'ergot 16, aucun glissement des deux parties du boîtier l'une sur l'autre n'est possible, quel que soit le différentiel de dilatation thermique qui peut affecter ces deux parties. L'ergot 16 ainsi monté joue donc le rôle d'une des vis qui servent à assembler classiquement les deux parties du boîtier. Il assure la fermeté de l'indispensable assemblage de ces deux parties sans empêcher, comme on le verra dans la suite, une libre dilatation différentielle de ces parties.

On se réfère maintenant aux figures 4 et 5 où l'on a représenté un moyen de liaison avec jeu qui se substitue à la vis classiquement installée dans la position de la vis référencée 15B sur la figure 1. Dans ces figures et dans les figures 6 et 7, des références numériques identiques à celles utilisées sur la figure 3, et éventuellement affectées d'un "prime" ou d'un "seconde", repèrent des organes identiques ou similaires. Ainsi à la figure 4, le moyen de liaison à jeu représenté comprend un ergot 16' débordant, comme l'ergot 16, du couvercle du boîtier pour pénétrer dans un trou étagé 20', 21' percé dans le fond 13 du boîtier. L'ergot 16' est percé d'un trou axial 18' qui est entouré, à son débouché sur l'extrémité libre de l'ergot 16', par un épaulement annulaire 19'.

Suivant une caractéristique de la cassette selon l'invention, qui apparaît sur la vue en coupe représentée à la figure 5, il apparaît que le trou 20' est de forme oblongue de manière à définir une boutonnière d'axe X. L'épaulement 19' présente un diamètre sensiblement égal à la largeur de cette boutonnière, mesurée perpendiculairement à l'axe X. La hauteur de l'épaulement 19' est telle que celui-ci définit une surface de butée 22' pour la tête de vis 17A' propre à maintenir celle-ci légèrement à l'écart d'une portée du trou 20'. Le fond 13 du boîtier repose sur une surface d'appui 23' formée à la base de l'épaulement 19'. Les surfaces 22' et 23' sont suffisamment écartées pour que la tête de vis 17A' ne serre pas le fond 13 du boîtier. Cette tête empêche seulement une séparation des deux parties de ce boîtier.

La présence de la surface de butée 22' et de la surface d'appui 23' sur un même ergot 16' constitue une caractéristique essentielle de la présente invention. La fabrication par moulage du couvercle 14 du boîtier et de l'ergot 16' permet de définir avec précision la distance de ces surfaces, réglée à une valeur légèrement supérieure à la hauteur du trou 20'. Cette dernière peut elle-même être fixée avec précision lors de l'usinage du trou 21' dans le fond métallique 13 du boîtier. On obtient ainsi le jeu perpendiculaire au plan de glissement relatif des deux parties du boîtier, nécessaire pour autoriser ce glissement, par des moyens qui assurent l'absence de tout blocage à ce niveau.

Ainsi apparaît-il que l'ergot 16' dispose d'un degré de liberté dans la boutonnière 20', suivant l'axe X de cette boutonnière. Si par conséquent des variations de température subies par le boîtier de la cassette sont telles qu'une dilatation différentielle des deux parties du boîtier provoque un déplacement de l'ergot dans la boutonnière suivant l'axe X, rien ne s'opposera à un tel déplacement, et les deux parties du boîtier pourront glisser relativement l'une à l'autre suivant cet axe, au niveau de cet ergot. La présence du moyen de liaison 16', 17' n'impose aucune transmission de contraintes entre les deux parties du boîtier, et ne provoque donc aucun cintrage de ce boîtier, conformément au but essentiel de la présente invention.

Avantageusement, l'axe X de la boutonnière 20' est aligné avec l'axe qui joint les emplacements 15A et 15B. Cet axe est parallèle à la plus grande des dimensions du boîtier 1, généralement rectangulaire et, en outre il est parallèle à la direction générale de circulation de la bande magnétique 2, au niveau de la trajectoire suivie par celle-ci devant la tête magnétique 5. On tire de cette disposition deux avantages. D'une part les positions 15A et 15B étant relativement éloignées l'une de l'autre, toute dilatation différentielle des deux parties du boîtier est particulièrement sensible sur la distance qui les sépare et il est donc important d'autoriser un glissement relatif des parties du boîtier parallèlement à la direction définie par les emplacements 15A et 15B. D'autre part, en autorisant un glissement relatif sans contrainte des deux parties du boîtier suivant cette direction, on minimise les perturbations apportées à la géométrie du boîtier au niveau de l'interface tête/bande magnétique 5, transversalement à la trajectoire de la bande. Il s'agit là d'une caractéristique essentielle car, comme on l'a vu plus haut, il faut éviter tout décalage transversal de la bande 2 par rapport à la tête 5, pour ne pas perturber l'enregistrement ou la lecture de la pluralité de pistes longitudinales parallèles portées par cette bande, par décentrage de la tête par rapport à la piste enregistrée ou lue.

Si les deux parties de la cassette doivent être assemblées en plus de deux emplacements tels que 15A et 15B, pour des raisons de solidité de l'assemblage par exemple, il convient d'étendre les possibilités de glissement établies suivant l'axe X à toutes les autres directions d'un plan parallèle au fond-du boîtier, puisque les dilatations de ce boîtier se manifeste dans toutes ces directions. Du fait de la faible épaisseur de la cassette, on peut négliger les effets des dilatations orientées perpendiculairement à ce plan.

Suivant l'invention, pour autoriser une libre dilatation des deux parties du boîtier dans toutes les directions de ce plan, on remplace chacun des vis fixées classiquement dans les positions 15C et 15D par le moyen de liaison représenté aux figures 6 et 7.

Celui-ci est très voisin de celui des figures 4 et 5 et s'en distingue essentiellement en ce que la boutonnière 20′ strictement ajustée dans une direction sur l'épaulement 19′, est remplacée par un trou circulaire 20″ dimensionné pour laisser un jeu tout autour de l'épaulement annulaire 19″ formé à l'extrémité de l'ergot 16″. Une vis 17″ est serrée dans le trou axial 18″ formé dans l'ergot 16″ de manière à s'arrêter sur une surface de butée 22″ formée à l'extrémité de l'épaulement 19″ tandis qu'une surface d'appui 23″ est formée sur cet ergot à la base de l'épaulement pour recevoir le fond 13 du boîtier de la cassette. L'espace séparant les deux surfaces 22″ et 23″ est dimensionné de manière à permettre un glissement relatif des deux parties du boîtier, dans toutes les directions d'un plan perpendiculaire à l'axe de l'ergot, pour permettre l'absorption sans contrainte de tout différentiel de dilatation entre les deux parties du boîtier, au niveau des liaisons ainsi établies en 15C et 15D.

Suivant une autre mise en oeuvre de la présente invention, on assemble les deux parties du boîtier de la cassette par deux moyens de liaison tels que représentés aux figures 4 et 5 et disposés aux emplacements 15A et 15B (voir figure 1) où ces moyens coopèrent avec des boutonnières $20'_1$, $20'_2$ coaxiales, représentées en trait interrompu à la figure 1.

Ces deux boutonnières autorisent un glissement relatif des deux parties du boîtier suivant leur axe X commun, parallèle à la direction de défilement de la bande 2 devant une tête d'enregistrement/lecture 5, ce glissement étant limité par la longueur des boutonnières.

Avantageusement, suivant la présente invention, on dispose un troisième moyen de liaison du type de celui des figures 4 et 5 en au moins un emplacement 15C écarté de l'axe X, ce troisième moyen coopérant à cet emplacement avec une boutonnière $20'_3$, d'axe Y non parallèle à l'axe X et, de préférence, sensiblement perpendiculaire à cet axe.

Un boîtier de cassette ainsi conçu peut se dilater différentiellement parallèlement aux deux axes X et Y, les points homologues des deux parties du boîtier situés en regard du point d'intersection Z de ces axes restant sensiblement fixés l'un par rapport à l'autre.

On tire de cette disposition deux avantages. D'une part, les deux parties du boîtier restent sensiblement en regard l'une de l'autre grâce au maintien en repérage des points homologues de ces parties situées au niveau du point Z, malgré les dilatations différentielles qui les affectent et qui peuvent provoquer un décalage de quelques centièmes de mm de ces deux parties l'une part rapport à l'autre. A l'oeil, le boîtier semble ainsi n'avoir subi aucune déformation.

D'autre part, cette disposition de boutonnières permet d'absorber les tolérances de fabrication de la partie moulée du boîtier, à savoir le couvercle 14, plus larges que celles concernant le fond métallique 13. Ces tolérances sont dues au retrait de la matière plastique, difficile à contrôler et peuvent affecter les positions des ergots des moyens de liaison. Les boutonnières permettent de tolérer des variations sensibles des positions de ces ergots.

Le graphe B de la figure 8 permet de mesurer la diminution de cintrage d'origine thermique obtenue par la mise en oeuvre de l'invention. Entre 20°C et 40°C par exemple, le cintrage observé devient quasiment négligeable, d'un ordre de grandeur inférieur à celui observé sur une cassette à assemblage par vis. L'élimination pratiquement complète de tout cintrage permet d'éviter tout décalage latéral de la bande 2 par rapport à la tête magnétique 5, et donc d'éviter toute perturbation du processus d'enregistrement/lecture qui pourrait résulter d'un tel cintrage.

On comprend maintenant que les moyens de liaison prévus suivant l'invention aux emplacements 15A à 15D permettent aux deux parties du boîtier de se déformer librement sous l'effet de leur dilatation propre, sans qu'un différentiel de dilatation ne provoque l'apparition entre ces parties d'aucune contrainte génératrice d'un cintrage du boîtier. Les moyens utilisés assurent néanmoins l'assemblage de ces deux parties qui définissent ainsi un logement protégeant efficacement la bande magnétique contenue dans la cassette. Cet assemblage, assuré par les larges têtes des vis utilisées, n'est pas susceptible de se rompre accidentellement. L'assemblage fixe établi par l'ergot 16 (figures 3 et 4) en 15A établit une référence de position relative commune aux deux boîtiers, au voisinage de la partie sensible de la cassette (là où la bande vient en contact avec la tête 5), qui permet de minimiser l'influence des dilatations libres des deux parties du boîtier sur la géométrie de la cassette à ce niveau. De manière alternative, la référence de position peut être établie à l'intersection des axes X et Y des boutonnières utilisées, comme illustré à la figure 1.

Bien entendu l'invention n'est pas limitée au mode de réalisation décrit et représenté qui n'a été donné qu'à titre d'exemple. Ainsi l'invention n'est pas limitée à une cassette de bande magnétique mais s'étend au contraire à toute cassette contenant un produit en bande, reçu sur une ou plusieurs bobines. Le nombre des points d'assemblage n'est pas non plus limité à 4. En particulier, les moyens de liaison du type de ceux implantés en 15C et 15D pourraient être réduits ou accrus en tant que de besoin. On ne sortirait pas du cadre de l'invention en intervertissant les positions des moyens de liaison prévus en 15A et en 15B, en remplaçant le moyen de liaison prévu en 15B par celui proposé pour l'emplacement 15C, ou en remplaçant le moyen d'assemblage fixe par l'un des moyens de liaison suivant l'invention. Plus généralement, l'invention s'étend à tout boîtier en deux parties assemblées par des moyens de liaison à jeu de manière à pouvoir se dilater librement.

## Revendications

1. Cassette de produit en bande, comprenant au moins une bobine (3, 4) du produit (2) montée à rotation dans un boîtier (1) protégeant cette bobine, ce boîtier comprenant au moins deux parties (13, 14) assemblées l'une à l'autre par au moins un moyen de liaison avec jeu autorisant à son niveau un glissement relatif d'une partie du boîtier sur l'autre en cas de dilatation différentielle de ces deux parties, ledit moyen de liaison étant constitué par un ergot (16', 16") formé dans une partie du boîtier et par une vis (17', 17") fixée dans cet ergot et traversant un trou (20', 20") percé dans l'autre partie du boîtier de manière que sa tête empêche les deux parties (13, 14) du boîtier de s'écarter l'une de l'autre suivant l'axe de la vis, caractérisée en ce que l'extrémité dudit ergot (16', 16") traverse le trou (20', 20") et est conformée pour définir une surface d'appui (23', 23") d'une paroi de la partie (13) du boîtier (1) dans laquelle est formée ledit trou (20', 20") et une surface de butée (22', 22") pour la tête de vis, la distance de ces surfaces étant telle qu'elle établit un léger jeu autorisant ledit glissement relatif des parties du boîtier situées entre ces surfaces.

2. Cassette conforme à la revendication 1, caractérisée en ce que le trou prend la forme d'une boutonnière (20').

3. Cassette conforme à la revendication 2, caractérisée en ce qu'elle comprend en outre un moyen d'assemblage fixe (16, 20) distant du moyen de liaison avec jeu et assurant le maintien en regard de deux points homologues des deux parties du boîtier (1).

4. Cassette conforme à la revendication 3, caractérisée en ce que l'axe (X) de la boutonnière (20') passe par le moyen d'assemblage fixe (16, 20).

5. Cassette conforme à la revendication 4, contenant un support de magnétogramme en forme de bande agencé pour défiler suivant une direction prédéterminée contre une tête d'enregistrement/lecture, caractérisée en ce que l'axe (X) de la boutonnière est parallèle à cette direction.

6. Cassette conforme à l'une quelconque des revendications 2 à 5, caractérisée en ce qu'elle comprend en outre au moins un autre moyen de liaison (16",20") constitué par un ergot (16") solidaire d'une des parties du boîtier et passant dans un trou (20") percé dans l'autre partie de ce boîtier, ce trou (20") étant dimensionné de manière à autoriser à son niveau un déplacement relatif dans un plan des deux parties du boîtier suivant deux degrés de liberté.

7. Cassette conforme à la revendication 6, caractérisée en ce que ledit autre moyen de liaison (16",20") est écarté de l'axe (X) défini par le moyen d'assemblage fixe (16,20) et par le moyen de liaison avec'eu (16',20').

8. Cassette conforme à la revendication 2, caractérisée en ce que les deux parties du boîtier sont assemblées par au moins deux moyens de liaison (16',20') coopérant avec des boutonnières (20'$_1$, 20'$_2$) coaxiales, l'axe des boutonnières étant parallèle à une direction de défilement de la bande contre un organe extérieur d'enregistrement/lecture d'informations sur la bande.

9. Cassette conforme à la revendication 8, caractérisée en ce que les deux parties du boîtier sont assemblées en outre par au moins un troisième moyen de liaison coopérant avec une troisième boutonnière (20'$_3$) écartée des deux premières et d'axe sensiblement perpendiculaire à l'axe commun de celles-ci.

10. Cassette conforme à l'une quelconque des revendications précédentes, caractérisée en ce que le boîtier est constitué d'une première partie (13) métallique définissant un fond plan et d'une deuxième partie (14) en matière plastique constituant un couvercle.

11. Cassette conforme à l'une quelconque des revendications précédentes, dans laquelle le produit en bande est une bande magnétique (2) adaptée à l'enregistrement/lecture d'informations numériques.

FIG.:1

FIG.:2
(TECHNIQUE ANTÉRIEURE)

FIG.:3

FIG.:4

FIG.:5

FIG.:6

FIG.:7

FIG.:8

**Office européen des brevets**

# RAPPORT DE RECHERCHE EUROPEENNE

Numero de la demande

EP 92 40 0506

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A,D | US-A-4 989 806 (J.A.EGGEBEEN)<br>* colonne 3, ligne 14 - colonne 5, ligne 24 *<br>* abrégé; figures *<br>--- | 1-11 | G11B23/087<br>G11B23/04 |
| A | US-A-4 674 703 (M.L.FALK)<br><br>* colonne 1, ligne 60 - colonne 3, ligne 18 *<br>* abrégé; revendications 1-5; figures *<br>--- | 1-4,10,11 | |
| A,D | US-A-4 571 789 (E.T.MORIOKA)<br><br>* colonne 1, ligne 22 - colonne 2, ligne 27; figures *<br>--- | 1-3,10,11 | |
| A | EP-A-0 071 996 (HITACHI MAXELL LTD.)<br>* revendications 1-3; figures *<br>--- | 1-4 | |
| A | DE-A-3 409 726 (HITACHI MAXELL LTD.)<br>--- | | |
| A | US-A-4 330 068 (S.SHOJI)<br><br>----- | | |
| | | | **DOMAINES TECHNIQUES RECHERCHES (Int. Cl.5 )**<br><br>G11B |

Le présent rapport a été établi pour toutes les revendications

| Lieu de la recherche | Date d'achèvement de la recherche | Examinateur |
|---|---|---|
| LA HAYE | 13 MAI 1992 | DECLAT M.G. |